# EUROPEAN PATENT SPECIFICATION

(11) **EP 1 479 196 B1**
(45) Date of publication and mention of the grant of the patent: **01.10.2008**
(21) Application number: 01275177.2
(22) Date of filing: 19.07.2001
(51) Int. Cl.: H04L 12/56

(54) **DATA COMMUNICATION IN FRAME MODE FOR DIFFERENTIATED SERVICES**
DATENKOMMUNIKATION IM RAHMENMODUS FÜR DIFFERENZIERTE DIENSTE.
COMMUNICATION DE DONNEE EN MODE DE TRAME POUR DES SERVICES DIFFERES

(30) Priority: 02.05.2001 PT 10260401
(43) Date of publication of application: 24.11.2004
(73) Proprietor: INESC INOVAÇÃO-INSTITUTO DE NOVAS TECNOLOGIAS (INOV), 1000-029 Lisboa (PT)
(72) Inventor: DOS SANTOS NUNES, Mário, Serafim, 1900-077 Lisboa (PT)
(74) Representative: Pereira da Cruz, Joao
(86) International application number: PCT/PT2001/000015
(87) International publication number: WO 2002/089427

(56) References cited:
- EP-A- 0 843 442
- WO-A-00/45555
- US-A- 5 557 608
- PATENT ABSTRACTS OF JAPAN vol. 012, no. 285 (E-642), 4 August 1988 (1988-08-04) & JP 63 061532 A (NEC CORP), 17 March 1988 (1988-03-17)
- O'NEILL A ET AL: "AN OVERVIEW OF INTERNET PROTOCOLS" BT TECHNOLOGY JOURNAL, BT LABORATORIES, GB, vol. 16, no. 1, 1998, pages 126-139, XP000736934 ISSN: 1358-3948

## Description

### BACKGROUND OF THE INVENTION

The present invention is related to a method for data communication over a common channel. The classical data communication technologies in Wide Area Networks are circuit switching and packet switching, having Frame Relay and Asynchronous Transfer Mode (ATM) assumed more recently a significant role. In the areas related with the invention, data communications and networking, there is a lot of activity in several standardisation bodies, namely the International Organisation for Standardisation, ITU-T, IETF and Frame Relay Forum. The following documents of these standardisation bodies are referred in this invention:
• International Organisation for Standardisation, ISO Standard 3309-1979, "Data communication - High-level data link control procedures - frame structure", 1979.
• International Organisation For Standardisation, ISO Standard 3309:1984/PDAD1, "Information processing systems - Data communication - High-level data link control procedures - Frame structure - Addendum 1: Start/stop transmission", 1984.
• IETF RFC 791, Postel, J., "IP: Internet Protocol", September 1981.
• IETF RFC 795, Postel, J., "Service Mappings," September 1981.
• IETF RFC 768, Postel, J., "User Datagram Protocol", August 1980.
• IETF RFC 761, Postel, J., "Transmission Control Protocol," January 1980.
• IETF RFC 2508, Casner, S.; Jacobson, V., "Compressing IP/UDP/RTP Headers for Low-Speed Serial Links", February 1999.
• IETF RFC 1661, Simpson, W., "The Point-to-Point Protocol (PPP)", July 1994.
• IETF RFC 1662, Simpson, W., "PPP in HDLC-like Framing", July 1994.
• IETF RFC 1990, Sklower, K., "The PPP Multilink Protocol", August 1996.
• IETF RFC 2686, Bormann, C., "The Multi-Class Extension to Multi-Link PPP", September 1999.
• IETF RFC 2475, Blake, S., "An Architecture for Differentiated Services", December 1998.
• IETF RFC 2474, Nichols, K., "Definition of the Differentiated Services Field (DS Field) in the IPv4 and IPv6 Headers", December 1998.
• ITU-T, Recommendation Q.922 - "ISDN Data Link Layer Specification for Frame Mode Bearer Services", 1992.
• ITU-T, Recommendation V.120, "Support by an ISDN of Data Terminal Equipment with V-Series Type Interfaces with Provision for Statistical Multiplexing", October 1996.
• Frame Relay Forum, FRF.12, "Frame Relay Fragmentation Implementation Agreement", December 1997.
The following patents are mentioned due to the fact that they present proposals which are related with this invention:
• United States Patent US-5557608, Calvignac, J.; Galand, C.; et. al.; "Method and Apparatus for Transmission of High Priority Traffic on Low Speed Communication Links", September 1996.
• PCT WO-00/4555, DATA RACE INC., "Escape Sequence Protocol for Multiplexing Real-Time Data with Non-Real-Time Data", August 2000.
• Patent Abstract of Japan JP-63061532, NEC CORP, "Interruption Data Transfer System", March 1998.
• European Patent EP-0843442, CANON KK, "Communication system for communicating a plurality of time-division multiplexed data, and control method therefore", May 1998.

Patent US-5557608 presents a method for supporting high priority traffic on low speed communication links, that uses a preempt/resume protocol based on special non-standard flags, a 9-bit sequence for the start-preempt flag and a 10-bit sequence for the end-preempt flag. The main limitations of this patent are the support of only two traffic priorities, and the incompatibility with standard HDLC controllers. These limitations do not exist in the present patent, which allows an indefined number of traffic priorities and consequently the support of the different PHB defined in the Differenciated Services model. The compatibility of the current invention with the HDLC basic functions allows the use of standard hardware controllers.

Patent WO-00/4555 presents a method for low latency multiplexing of real-time and regular data in the same data frame. The main limitations of this patent are the support of only two traffic priorities, and the support of only octet-oriented protocols. These limitations do not exist in the current invention, which allows an indefined number of traffic priorities and supports different types of protocols, namely octet-oriented and bit-oriented protocols.

Patent JP-63061532 presents a method that allow the interruption of normal data transmission when the transmission request of a preferencial data frame is received. The main limitations of this patent are the support of only two traffic priorities, and the use of a mechanism in the reserve channel to activate the transmission of the preferencial data, which implies additional delays. In the current invention the activation of the mechanism to send priority data is done in the sender, without requiring the reception of any information from the receiver.

Patent EP-0843442, presents a communication system for use on a time-division multiplexed channel, with support for real-time and non real-time data. This patent do not define mechanisms for channel preemption, as proposed in the current invention.

### BRIEF DESCRIPTION OF THE DRAWINGS

The present invention contains 16 figures, which are described shortly.
Figure 1 - frame formats and corresponding functional layers proposed in this invention.
Figure 2 - Functional layers structure proposed in this invention and corresponding service access points to the proposed bearer services.
Figure 3 - Generic diagram for implementation of the method proposed in this invention
Figure 4 - Example of the transmission of a data packet pre-empted and segmented by a higher priority voice packet.
Figure 5 - Example of the receiver functionality, when receiving a frame sequence with segmentation.
Figure 6 - Timing diagram of packet voice and data transmission using HDLC multiplexing.
Figure 7 - Timing diagram of packet voice and data transmission using the method proposed in this invention.
Figure 8 - Adaptation of the PPP frame to the method proposed in this invention.
Figure 9 - Adaptation of the PPP Multilink frame to the method proposed in this invention.
Figure 10 - Adaptation of the Multi-class PPP Multilink frame to the method proposed in this invention.
Figure 11 - Adaptation of the Frame Relay frame to the method proposed in this invention.
Figure 12 - Adaptation of the Frame Relay with Fragmentation (FRF.12) to the method proposed in this invention.
Figure 13 - Adaptation of the V.120 protocol to the method proposed in this invention.
Figure 14 - Adaptation of the E1 2 Mbit/s frame to the method proposed in this invention.
Figure 15 - Application scenario of the method proposed in this invention in Voice/Data Modem over analog line.
Figure 16 - Application of the method proposed in this invention in Integrated Access Device (IAD) for simultaneous access to Public Switched Telephone Network (PSTN) and Internet over analog line.

### DETAILED DESCRIPTION

The present invention is related to a method for data communication for differentiated services based in frames with flexible format, which allows the simultaneous transmission of several types of information with different requirements of quality of service, via a common communication channel. The quality of service of the different services is guaranteed with a mechanism of channel preemption, which allows the immediate occupation of the channel with the most priority frame, resuming the transmission of the lower priority frame, without the need of retransmiting the octets already transmitted. This preemption mechanism guarantees, simultaneously, a low transmission delay for the services that are more sensitive to transmission delays and an efficient channel occupation. This mechanism is recursive, which means that the frame that made channel preemption can itself be preempted by another higher priority frame, and this process can be repeated whenever a higher priority frame requests transmission.

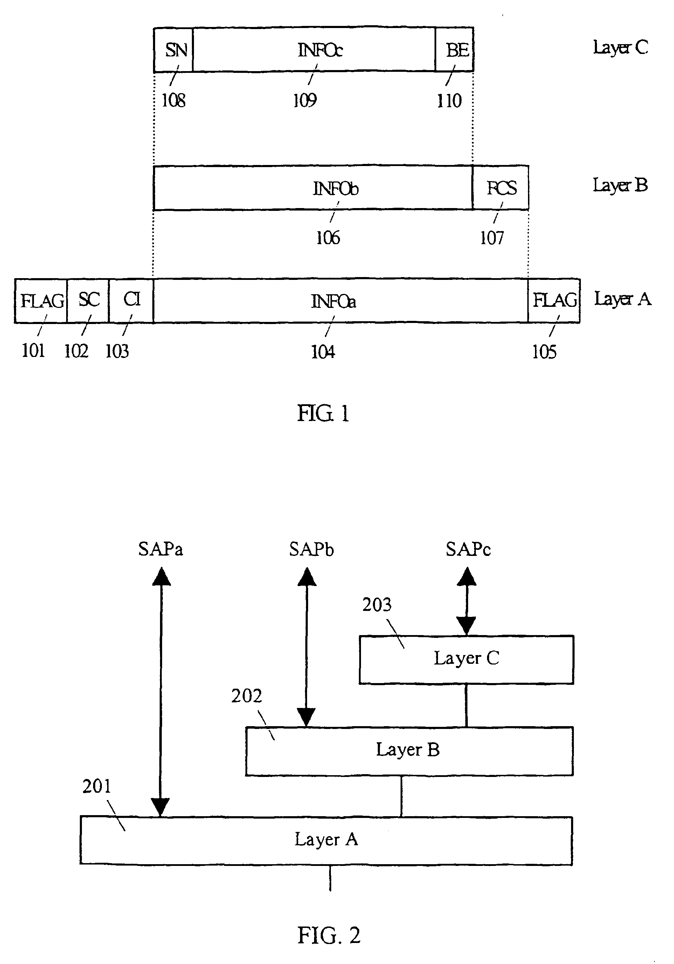

The said frames are based on the HDLC protocol, as defined in ISO 3309, using several mechanisms and fields depending of the service requirements and defining three different frame formats, A, B and C, which correspond to three functional layers equally named A, B and C, as shown in Figure 1. Said frame A format contains the fields (101 to 105) corresponding to layer A. Said frame B format contains the fields (101 to 107) corresponding to layers A and B. Said frame C format contains the fields (101 to 110) corresponding to layers A, B and C. Said layer A correspond basically to, frame delineation, multiplexing and information transparency, said layer B corresponds to error detection and said layer C to channel preemption and frame fragmentation.

Based on the said three layers A, B and C and its respective frames, we define three bearer services, named Sa, Sb and Sc, identified respectively by its service access points, SAPa, SAPb and SAPc, as shown in Figure 2.

Said bearer service Sa, which corresponds to said SAPa through said layer A (201) using said frames A, includes the following functionality:
a) frame delineation mechanism based on a begin FLAG (101) and an end FLAG (105), as in HDLC;
b) fill-in mechanism based on HDLC FLAGs;
c) in synchronous serial interface the mechanism of bit stuffing is used, which consists in the insertion of a zero bit after the occurrence of five consecutive one bits and its removal at the receiver, to guarantee the transparency of information between the said begin and end FLAGS, as in HDLC; in case of asynchronous serial interfaces octet oriented, the mechanism of octet stuffing is used, as defined in ISO 3309:1984/PDAD1 and IETF RFC 1662.
d) transport of higher layers information, contained in the variable field INFOa (104), as in HDLC;
e) field SC (102), which identifies the service class and implicitly the frame format, used for that specific class. Based on this field the receiver knows which is the format (A, B or C) of the frame received;
f) field CI (103), which identifies a specific channel inside a service class.

The said fields SC and CI have variable length, and together correspond to the HDLC field address. In case there is a single channel in each service class the said field CI can be removed. For compatibility with HDLC address field, the least significant bit in each octet of the said fields SC and CI, corresponding to the extension bit of the HDLC address field, should be 0, with the exception of the last octet of the second field, which should be 1.

The users of said bearer service Sa are typically real-time services, which have low tolerance to delay and delay variation, namely speech, audio and circuit emulation.

Said bearer service Sb, which corresponds to said SAPb with access through said layer B (202) and using said frames B, adds to the functionality of said layer A the mechanism of frame error detection, based on the field FCS (107), as used in the HDLC protocol. The users of said bearer service Sb could be real-time services requiring error detection, namely packet voice services.

Said bearer service Sc, which corresponds to said SAPc with access through said layer C (203) and using said frames C, adds to the functionality of said layers A and B the functionality of said layer C, based on two additional fields:
a) SN (Sequence Number) field (108) that indicates the transmission frame sequence number for a specific service class SC. This field is initialised at 0 and it is incremented for each frame of a specific class sent. This means that each service class has its own independent frame sequence counter.
b) BE (Begin/End) field (110) that is used in the said preemption mechanism, which allows the suspension of a frame by a higher priority frame. The said field BE contains two bits, B (*begin*) and E (*end*), allowing the reassembly of the different parts of a segmented frame at the receiver, with the following coding values:
   BE = 11 - Non segmented frame
   BE = 10 - First segment of a frame which was segmented
   BE = 00 - Middle segment of a frame which was segmented
   BE = 01 - Last segment of a frame which was segmented

The location of said BE field at the end of the frame, just before the said FCS field, allows to optimise the efficiency of the preemption mechanism, minimising the queuing delay of the higher priority frame that made the channel preemption. Said bits B and E and padded with six additional bits for octet alignment. These six bits can be used by upper layers, being set to 0 if not used. Users of said bearer service Sc are typically non real time services, tolerant to delay and delay variation, allowing the segmentation of the original data units in two or more segments and its reassembly at the receiver.

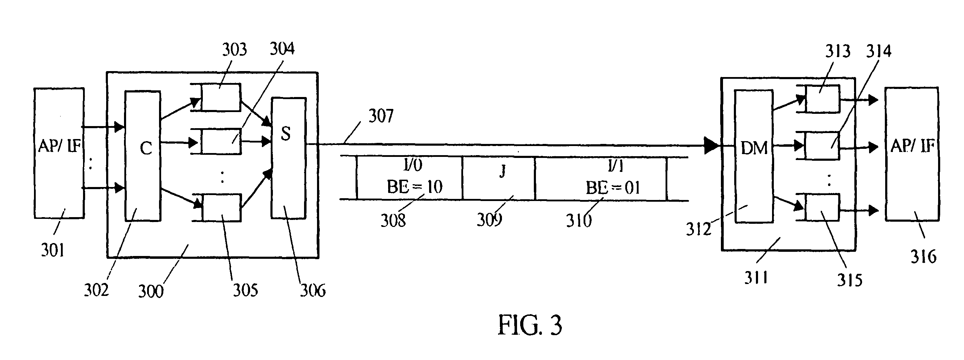

In Figure 3 a generic diagram of implementation of the method described in this invention is presented. Several applications or interfaces generate traffic (301) and send its data to a Classifier module (302) at the Sender (301). Based on different predefined criteria the said Classifier sends the frames to different data queues (303, 304, 305), each one corresponding to a specific service class. Based on the predefined criteria of priority assignment to the different queues, the Scheduler (306) transmits the data coming from the different queues to the common transmission channel (307).

Based on said fields SC, SN and BE it is possible to suspend a frame being transmitted (308) and start the transmission of an higher priority frame (309), resuming the transmission of the previous frame (310) after finishing the transmission of the higher priority one. The said preemption mechanism guarantee that the higher priority services, which require low transmission delay, like speech and audio, can be transmitted with the lowest possible delay, even for low bandwidth channels.

At the receiver (311) the Demux (312) analyses the received frame header, and based on the said SC field, sends the received data to the queue corresponding to that service class (313, 314, 315). In case of segmentation the said BE field allows to identify if the received segment is the last one, and said field SN allows to detect if any segment is missing.

The said Demux sends the data received in the begin and middle segments to the queue corresponding to a specific class, until an end segment is received meaning that the original frame is complete and is sent to the receiving application or output interface (316).

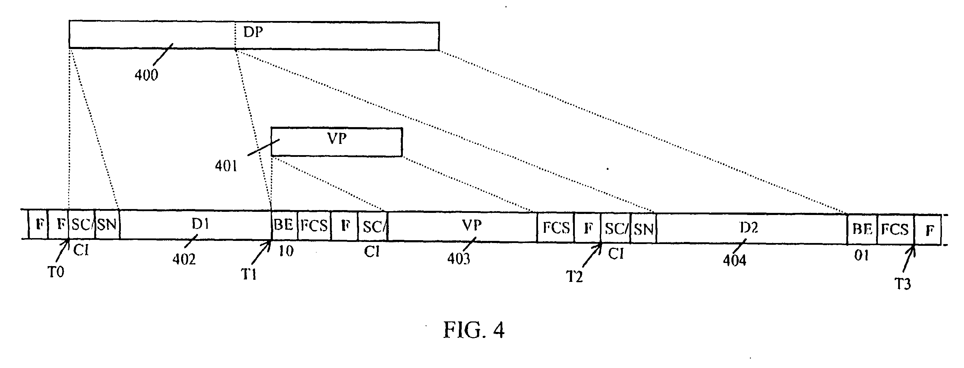

In Figure 4 an example of the transmission of a data packet (400) segmented by a higher priority voice packet (401) is presented. At instant T0 the said Scheduler detects a data frame in the corresponding queue in the sender, initiating the transmission of the data packet (402). At instant T1 the said Scheduler detects a voice packet (401) in a higher priority queue, starting immediately the suspension of the data frame and its segmentation, what implies to generate the said fields BE, FCS and FLAG, this one used as end FLAG of the data fragment and start FLAG of the voice frame. After the said FLAG the said fields SC and CI are inserted followed by the voice data (403). At instant T2 when the voice packet ends, the transmission of data packet is resumed with the second data segment (404), which ends at instant T3.

The method defined in this invention allows the utilisation of different criteria for classification of data among the several queues, depending on the type of equipments and protocols used. In IPv4 protocol (RFC 791) the TOS (Type of Service) field of IP packet header, with one octet length, can be used for classification of different service classes. Protocol Ipv6 contains a field named Traffic Class Octet, that can also be used for similar functions. Other possible classification criteria are based on higher layer protocols, namely in transport protocols, e.g. TCP or UDP, and the respective port numbers, or even in the type of application, or a combination of the referred criteria. In the Differentiated Services (DiffServ) Internet model the one octet length DSCP field is used to identify explicitly different service classes, allowing to differentiate them in the network nodes. In the Integrated Services (IntServ) Internet model the different services are identified by an integer value in the range 2-254 (RFC 2216). The general conclusion is that in all cases analysed the number of service classes is low, and can be coded using the said field SC with a reduced number of bits, in general not higher than one octet length.

To calculate the efficiency of the said preemption mechanism a system with a reduced number of service classes and a short number of users in each class is considered, so the said fields SC and CI together can be coded with one octet. As referred before, the said field BE is adjusted to one octet for compatibility with the HDLC protocol. As the length of said FLAG is one octet and the said FCS is 2 octets, the preemption time or the maximum delay to start the transmission of the priority frame is constant and correspond to the transmission of 5 octets in the common channel.

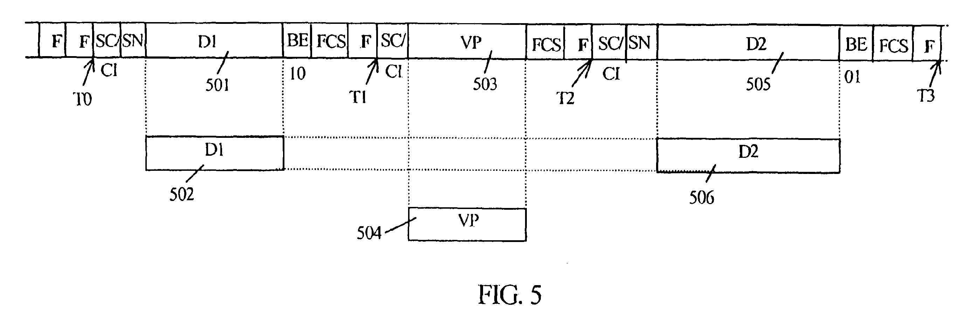

In Figure 5 the functionality of the receiver is exemplified with the reception of a frame sequence with segmentation. At instant T0, after the reception of the said SC field the receiver detects that a data frame (501) is being received and is stored in the corresponding queue (502). At instant T1 when the said FLAG is received the receiver concludes that a frame is terminated and checks the FCS for error detection. In case errors are detected the frame is discarded. If there are no errors detected the said SN field is checked to detect sequence number errors. In case of error the segment is discarded, else it is accepted. If in the said field BE the bit E is 0 it means that the frame is not complete consequently the frame is not sent yet to the output interface or receiving application. The next frame received (503) is voice which is simpler than data frame since it has no possibility of fragmentation, only requires FCS checking, so it can be sent to the output interface or receiving application after it has been received in instant T2. The third frame (505) is again data so it is stored in the same queue (506) as the previous data segment (502). If no errors are detected in said fields FCS and SN the data is received as valid and the bit E of the said field BE is tested to confirm if the frame is terminated, in which case the complete frame is sent to the output interface or receiving application.

If there is an FCS error in one segment received, the segment is discarded and consequently in the next segment an error in the said field SN is detected, what implies that the segment being received is discarded. All the segments received after this are also discarded since they all will have an error in the said field SN, until a segment is received with E=1, indicating the end of a packet. If by transmission error this segment with E=1 is not received, the receiver still is able to detect the beginning of a new packet identified with the bit B=1.

It should be noted that in the input interface or application, the data or voice packets can have any format, namely HDLC frames or octet blocks. In case the input format is HDLC, the transmitter remove the start and end HDLC FLAGs, FCS field and the bit or octet stuffed. At the receiver the reverse process takes place in order to restore the original HDLC frames.

As referred before the said channel preemption mechanism is recursive, allowing an higher priority service to suspend and segment a lower priority frame, which had already suspended another frame, and so on. This implies that the maximum number of frames being transmitted with interleaving is equal to the number of service classes minus one.

The limitations of the said preemption mechanism using the current serial communication controllers are now analysed. In case of the serial asynchronous interfaces there is no problem since the controller works on a octet basis, what means that the delay from the suspension of the transmission of data from one queue until the insertion of the said BE field has the maximum value equal to the transmission of one octet. In case of synchronous serial interfaces the HDLC controllers usually have a transmission buffer that usually can not be flushed in case of suspension of one frame, originating a preemption delay with the maximum value equal to the transmission of the controller buffer.

To assess the performance of the said method proposed in this invention we compare it with the method used in HDLC multiplexing. Table 1 shows the transmission times of HDLC frames for different lengths and channel bit-rates.

**Table 1 - Maximum HDLC queuing delay**

| **Channel** | **Queuing delay (ms)** | | | | | |
|---|---|---|---|---|---|---|
| | **64 octets** | **128 octets** | **256 octets** | **512 octets** | **1024 octets** | **1500 octets** |
| **56 Kbit/s asynchronous** | 11,43 | 22,86 | 45,71 | 91,43 | 182,86 | 267,86 |
| **56 Kbit/s synchronous** | 9,14 | 18,29 | 36,57 | 73,14 | 146,29 | 214,29 |
| **64 Kbit/s synchronous** | 8,00 | 16,00 | 32,00 | 64,00 | 128,00 | 187,50 |
| **128 Kbit/s synchronous** | 4,00 | 8,00 | 16,00 | 32,00 | 64,00 | 93,75 |
| **256 Kbit/s synchronous** | 2,00 | 4,00 | 8,00 | 16,00 | 32,00 | 46,88 |

As in the HDLC protocol there is no channel preemption, the priority frames will have to wait until the transmission of the current frame ends, which means that the values presented in Table 1 correspond to the maximum queuing delay of the high priority frames. The maximum queuing delay is directly proportional to the maximum frame length and inversely proportional to the channel bit-rate. Exemplifying with a frame of 1500 octets and a 56 Kbit/s asynchronous channel, the maximum queuing delay of an high priority frame would be 267.9 ms.

In the case of the said method proposed in this invention the queuing delay of an high priority frame will be only 0.89 ms for the same bit-rate and for any frame length, as can be seen in Table 2.

**Table 2 - Maximum queuing delay for the method proposed in this invention**

| **Channel** | **Queuing delay (ms)** |
|---|---|
| **56 Kbit/s asynchronous** | 0,89 |
| **56 Kbit/s synchronous** | 0,71 |
| **64 Kbit/s synchronous** | 0,63 |
| **128 Kbit/s synchronous** | 0,31 |
| **256 Kbit/s synchronous** | 0,16 |

One important application of the said method proposed in this invention is the multiplexing of voice and data over a low bit-rate channel, e.g. with a V.90 or V.92 Modem with maximum bit-rate of 56 Kbit/s. A possible utilisation could be to have Internet access for file transfer or WEB access and simultaneously to participate in a phone conversation. Phone communications based on IP are called Voice over IP (VoIP) and consists of packets with a compressed header of IP, UDP and RTP (2 or 4 octets), followed by a block of voice information (e.g. 20 octets). Data packets are usually much larger than the voice packets, with values up to 1500 octets, which could be limited to 500 octets in personal computer applications.

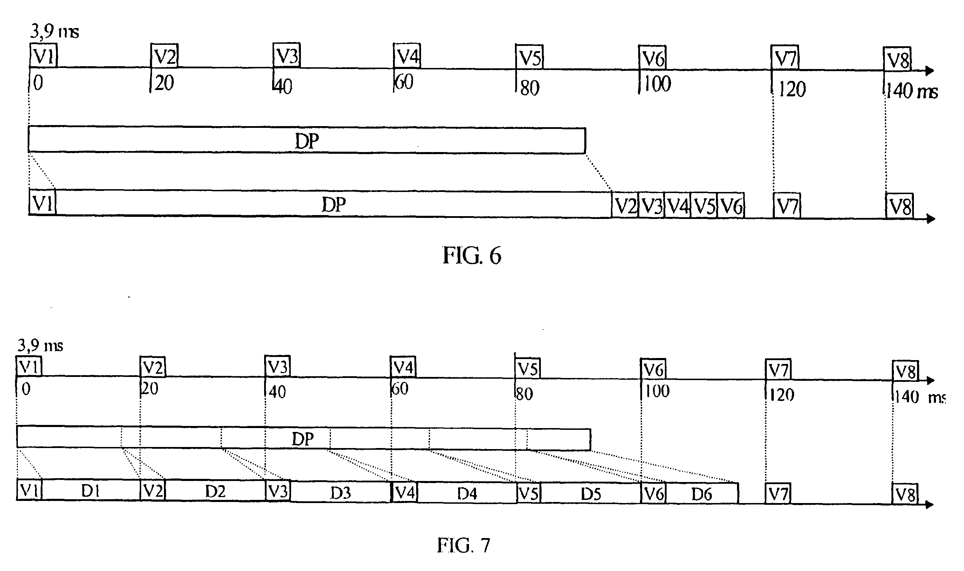

Figure 6 shows a diagram corresponding to the periodic transmission of voice packets with 22 octets and 20 ms period, simultaneously with a data packet of 500 octets.

The analysis of the Figure allows to conclude that the transmission delay for each voice packet is strongly variable, approximately from 0 to 74 ms.

| V1 | V2 | V3 | V4 | V5 | V6 | V7 | V8 | |
|---|---|---|---|---|---|---|---|---|
| 0 | 74 | 58 | 42 | 26 | 10 | 0 | 0 | (ms) |

The transmission interval between packets is also strongly variable, approximately from 4 to 90 ms.

| V2 - V1 | V3 - V2 | V4 - V3 | V5 - V4 | V6 - V5 | V7 - V6 | V8 - V7 |
|---|---|---|---|---|---|---|
| 90 ms | 4 ms | 4 ms | 4 ms | 4 ms | 8 ms | 20 ms |

Figure 7 shows a diagram illustrating the application of the said method proposed in this invention to the same traffic pattern, a sequence of periodic voice packets with 22 octets and 20 ms period simultaneously with a data packet of 500 octets. Due to the said preemption mechanism the voice packets are able to start transmission with very low delay (lower than 1 ms for a 56 Kbit/s channel). The transmission interval between voice packets is constant and approximately equal to 20 ms.

The adaptation of the said method proposed in this invention to different protocols switching technologies and transfer modes is analysed below.

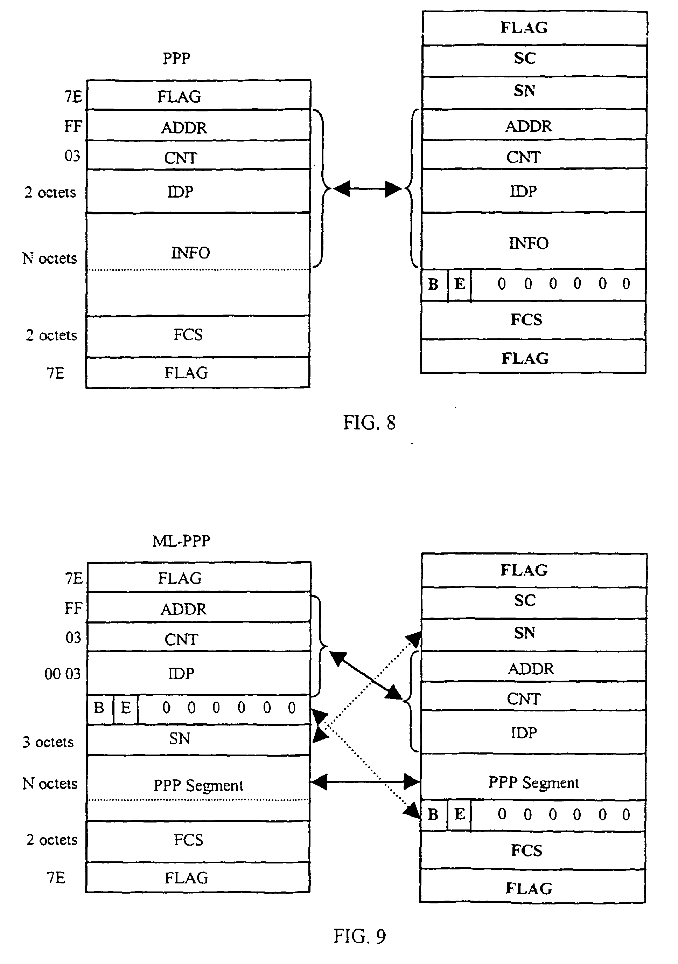

The Point-to-Point Protocol (PPP) defined in RFC 1661 is commonly used for Internet access. It is based on the HDLC protocol with the frame format shown on the left side of Figure 8, where the address field (ADDR) and control filed (CNT) have respectively the hexadecimal values of FF and 03 and the PID, protocol identifier, is the identifier of the protocol used in the information field. The adaptation of the PPP protocol to the said frame C defined in this invention is also illustrated in the right side of the figure, and consists in the copy of the fields ADDR, CNT, PID and INFO to the said frame C. As the PPP do not allow logic channel multiplexing the said CI field can be removed. The PPP INFO field could be not completely copied to the INFO field of said frame C if the PPP frame is suspended due to the channel preemption by a higher priority frame.

The PPP Multilink (PPP-ML) is defined in RFC 1990 as an extension of the PPP for use with multiple physical channels, with the basic frame shown in Figure 9. The adaptation of the PPP-ML to the frame C defined in this invention is also illustrated in the figure, where the fields BE and SN of PPP-ML have similar meaning and functionally of the corresponding fields of the said frame C but are located in different positions. The dotted lines connecting the referred fields between the two frames mean that there is a direct correspondence between them but its value could be different due to the said preemption mechanism and the existence of several classes.

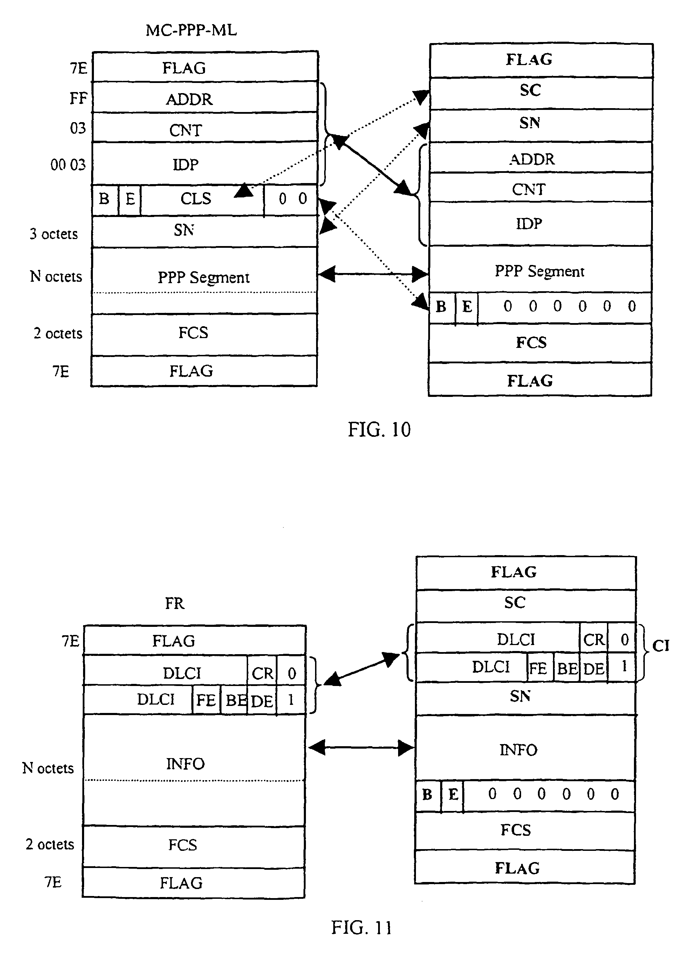

The Multi-Class PPP Multilink (MC-PPP-ML) is defined in RFC 2686 as an extension of the PPP Multilink for integrated services and real-time encapsulation formats, for utilisation with multiple service classes. Figure 10 shows the frame of this protocol with a long sequence number and its adaptation to said frame C defined in this invention. There is an additional field in the MC-PPP-ML, the Class (CLS) field, which is mapped to the said SC field of frame C. In both frames there is one sequence number counter for each service class.

The Frame Relay (FR) technology is defined in different organisation bodies, namely in Annex A of ITU-T Q.922 recommendation. Figure 11 shows the basic FR frame, together with its adaptation to said frame C defined in this invention. The information field of the FR frame, or part of it if the frame is suspended by a higher priority frame, is copied to the information field of said frame C. The FR header comprising the fields DLCI, C/R, FECN, BECN and DE are also copied to the said frame C, corresponding to the said CI.

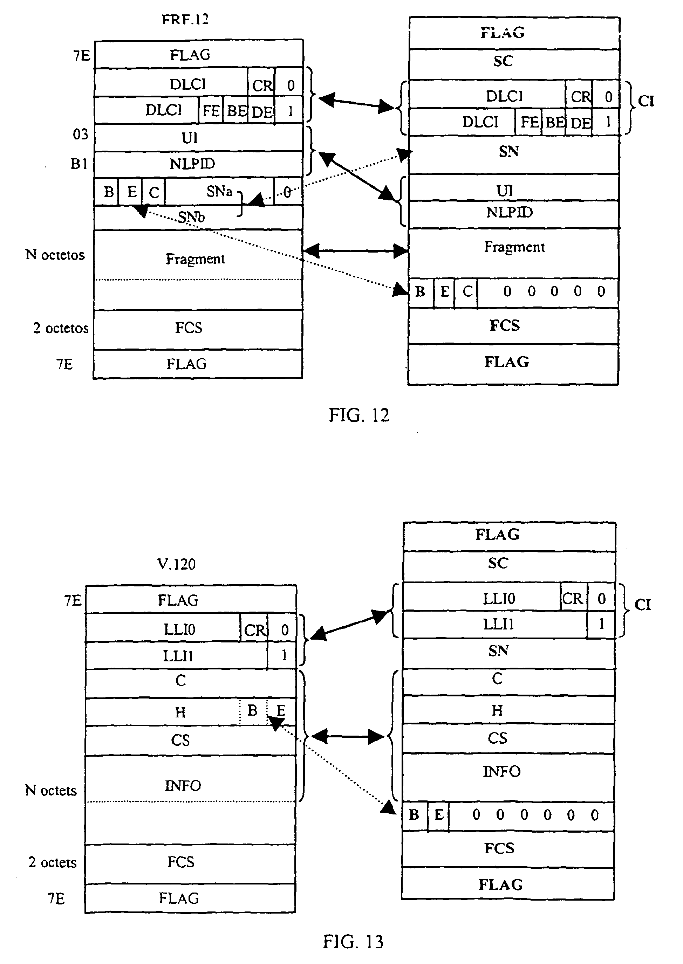

The Frame Relay Forum has defined in FRF.12 specification an extension to allow fragmentation of large data packets, in order to support voice and other real-time services sensitive to delay. The format of the FRF.12 frame is shown in Figure 12, together with the adaptation to said frame C defined in this invention. The first 2 octets of the frame FRF.12 that include the channel logic identifier and bits C/R, FECN, BECN, DE and EA, are copied to the said field CI. The fields UI, NLPID and data Fragment are also copied without modifications to the frame C defined in this invention. The dotted lines connecting the fields SN (SN a/SN b) and BE of both frames mean that there is a correspondence between these fields, but the values in each frame can be different due to the said preemption mechanism and the existence of several classes.

ITU-T V.120 recommendation defines the format and adaptation procedures for V series data terminals to ISDN with statistical multiplexing. Figure 13 shows the V.120 frame format, together with its adaptation to said frame C defined in this invention. The first two octets of V.120 frame that include.the logic channel identifier LLI and the bits C/R and EA are copied to the said CI field of said frame C. The fields C, H, SC and data Fragment are also copied without modifications.

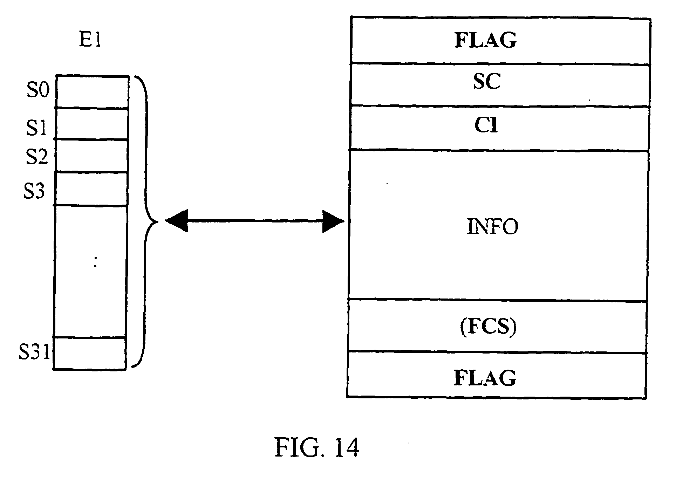

Figure 14 shows the adaptation of the 2 Mbit/s E1 frame of the circuit switching TDM (Time Division Multiplexing) to said frames A or B defined in this invention. Considering that the E1 frame can not be fragmented, a full 32 octets E1 frame is inserted in one said frame A or B. The choice between said frame A or B depends on the compatibility with the HDLC controller available, as these devices usually the use of field FCS is mandatory, implying the choice of said frame B.

Considering that the transmission time of one octet for the E1 interface is T=3.9 □s and that the said preemption mechanism has a delay of 5 T, the queuing delay of the E1 frame will be approximately 19.5 □s. The variation delay of the priority services is 3 T, which applied to the E1 interface gives a value of 11.7 □s. Considering these values we can conclude that the said method defined in this invention has queuing delays and delay variations much lower than other technologies.

Other TDM frames, namely fractional E1 or 1.544 Mbit/s T1 frame, will be carried also in said frames A or B, with different frame lengths and periods.

The comparison of the said method proposed in this invention with ATM allows to conclude that ATM has a higher protocol overhead due to existence of two layers, ATM and AAL (AAL1, AAL2, AAL3/4 or AAL5). The ATM fixed cell format introduces also additional overhead due to the incompletely filled cells, which occur with high probability.

The said mechanism of preemption and segmentation is more efficient than the fixed fragmentation of ATM or FRF.12, as it only occurs when necessary to guarantee the quality of service of higher priority frames, while in the other technologies referred the fragmentation overhead is always present.

In Table 3 a comparison between the said method proposed in this invention and several other communication protocols and technologies is presented, where the respective basic characteristics and functionality are compared, namely the capability of statistical multiplexing, maximum queuing delay and protocol overhead. The conclusion is that the said method proposed in this invention presents the best characteristics of all protocols shown, with exception of protocol overhead where it is only surpassed by circuit switching.

**Table 3 - Comparison between the said method proposed in this invention and other communication protocols**

| | Circuit switching TDM | Packet switching X.25 | Frame Relay with Fragmentation FRF.12 | Asynchronous Transfer Mode ATM | Method proposed in this invention |
|---|---|---|---|---|---|
| Statistical multiplexing | No | Yes | Yes | Yes | Yes |
| Maximum Queuing Delay | Very low | High | Low | Low | Very low |
| Overhead | Very low | High | Low | Medium | Low |

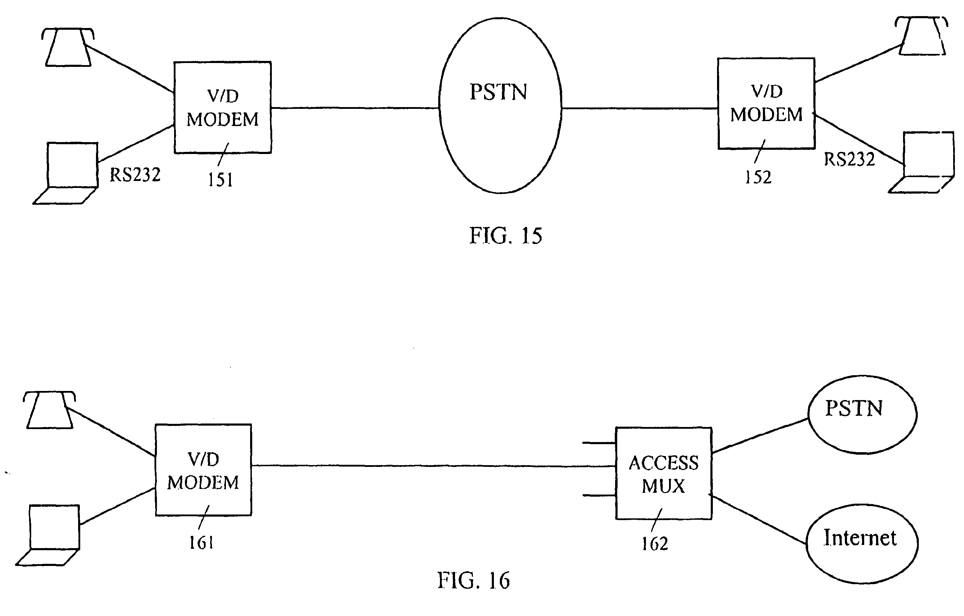

Figure 15 shows an application of the said method proposed in this invention where a Voice/Data Modem (151) implementing the said method is connected over an analog line to a similar modem (152) through the Public Switched Telephone Network (PSTN). It is possible in this scenario to establish voice and data communications over a common analog line, with low delay for voice and high efficiency for the data, even for bit-rates lower than 64 Kbit/s, as the case of V90 / V.92 modems.

In Figure 16 a new scenario similar to the configuration used in ADSL is presented, where a Voice/Data Modem (161) implementing the said method proposed in this invention is connected to an Access Multiplexer (162), which also implements the said method. With this configuration the user connected to a common low cost analog line can have simultaneous access to the Public Switched Telephone Network (PSTN) and to the Internet over the analog line. When there are no phone connections the full channel bit-rate is available for data. When a phone call is in progress, it gets priority and is not affected by the data channel, which is reduced of the bandwidth used by voice: In both situations a permanent connection to the Internet is guaranteed.

## Claims

1. Method for data communication which allows simultaneous transmission of different types of information, based on frames compatible with the HDLC protocol defined in ISO 3309, with several mechanisms and fields depending on the service requirements, with quality of service guarantees using a channel preemption mechanism that allows the suspension of the frame being transmitted and the immediate occupation of the channel with a higher priority frame, resuming the transmission of the suspended frame after the transmission of the higher priority frame, without need to retransmit the octets already transmitted, **characterised by** the said frames (1) are structured in three functional layers, A, B and C, with layer A having the functionality of frame delineation, multiplexing and information transparency, layer B the functionality of error detection and layer C the functionality of frame suspension/resume and frame fragmentation, corresponding these three layers to three frame formats, respectively frame A, frame B and frame C and three bearer services, named Sa, Sb and Sc, which can be used by different services, according to its quality of service requirements, supporting an indefined number of priorities, due to a mechanism of recursive suspension of one frame by another frame with higher priority, which allows the use of protocols with multiple classes of service, namely the Differentiated Services and Integrated Services protocols.

2. Method according to claim 1 whereby the said frames A (11) are **characterised by** the following fields, located sequentially in the frame by the order of presentation:
a) Start FLAG field with hexadecimal value 7E, identifier of the frame start, as in HDLC;
b) SC (Service Class) field, identifier of the service class and implicitly the frame type;
c) CI (Channel Identifier) field, identifier of a specific channel within a class, which can be omitted in case there is only one channel in each class;
d) both said SC field (22) and CI field (23) have a variable length and correspond together to the HDLC address field, which implies for full compatibility with HDLC that the least significant bit of each octet in both fields should be set to 0, with the exception of the last octet which should be set tol;
e) INFOa field with variable length, to carry information of higher layers;
f) End FLAG field with hexadecimal value 7E, identifier of the frame end, as in HDLC;

3. Method according to claims 1 and 2 whereby the said frames B (12) are **characterised by** a format based on said frame A (11) where the said INFOa field (24) is replaced by the following fields, located sequentially by the order of its description:
a) INFOb field with variable length, to carry information of higher layers;
b) FCS (*frame Check Sequence*) field for error detection, as in HDLC.

4. Method according to claim 1 to 3 whereby the said frames C (13) are **characterised by** a format based on said frames B (12) where the said field INFOb (26) field is replaced by the following fields, located sequentially by the order of its description:
a) SN (Sequence Number) field that indicates the sequence number of frame transmission for a specific service class, which is initialises in 0 and is incremented for each frame or segment that is sent, having each class an independent sequence number counter;
b) INFOc field with variable length, to carry information of higher layers;
c) BE field, comprising two bits, B (*begin*) and E *(end)* and six additional bits for octet alignment, with the said bits B and E used for frame segmentation state indication in the transmitter and reassembly of the different segments in the receiver, with the following coding:
BE = 11 - non segmented frame
BE = 10 - first segment of a segmented frame
BE = 00 - middle segment of a segmented frame
BE = 01 - last segment of a segmented frame.

5. Method according to claims 1 to 4 whereby the said bearer service Sa (31) is **characterised by** the following functionality, corresponding to the access through said layer A (41) and associated with the use of said frame A (11) :
a) Mechanism for delineation of information blocks or frames based on the said start FLAG (21) and said end FLAG (25), as in HDLC;
b) Channel filling mechanism based in HDLC FLAGs;
c) Mechanism of zero bit stuff insertion after the transmission of five consecutive one bits and its removal at the receiver, to avoid the imitation of the start or end FLAG pattern and guarantee the information transparency, as in HDLC, and used in synchronous serial interfaces;
d) Mechanism of Escape octet insertion to avoid the imitation of the start or end FLAG character and guarantee the information transparency, as defined in ISO 3309:1984/PDAD1 and in IETF RFC 1662, and used in octet oriented asynchronous serial interfaces;
e) Mechanism of frame and segment multiplexing of different classes, based on the said SC field (22);
f) Mechanism of frame multiplexing of different channels for a specific class, based on the said CI field (23) ;

6. Method according to claims 1 to 5 whereby the said bearer service Sb (32) is **characterised by** the functionality of the said bearer service A (31) with the addition of the following functionality of the said layer B (42), associated with the use of the said frames B (12):
a) Mechanism for generation of the said FCS field (27) in the transmitter, as in HDLC;
b) Mechanism for frame error detection in the receiver, based in the said FCS field (27), as in HDLC.

7. Method according to claims 1 to 6 whereby the said bearer service Sc (33) is **characterised by** functionality of said bearer service B with the addition of the following functionality of the said layer C (113), associated to the used of the said frames C (13):
a) Mechanism for numbering the frames or segments transmitted, through the said SN field (28), that is incremented for each frame or segment of a specific class that is sent;
b) Mechanism for checking the frame sequence numbering received, using the said SN field (28), allowing the detection of loss segments and consequently the detection of frames received with errors;
c) Mechanism of frame fragmentation, using the said BE field (29);
d) Mechanism of segment reassembly in the receiver, using the said BE field (29);
e) Mechanism of channel preemption by a higher priority frame, with low switching delay since the detection of a higher priority frame until starting its transmission, due to the location of the BE field at the end of the frame, just before the said FCS field (27);

8. Method according with claims 1 to 7, **characterised by** a multiplexing and switching technology that combines the advantages of low delay of circuit switching, the statistical multiplexing efficiency of packet switching and the simplicity of frame relay;

9. Method according with claims 1 to 7, **characterised by** having a recursive mechanism of channel preemption to guarantee low queuing delay for delay sensitive services, which allows that one frame that made channel preemption can be suspended by another more priority frame, which can itself be suspended, repeating the preemption mechanism as many times as necessary without increasing the overhead of the mechanism;

10. Method according with claims 1 to 7, **characterised by** a mechanism of service differentiation based on a number of service classes, allowing the transmission of the frames of the different classes to be done according with any arbitrary scheduling discipline defined by the user, in order to guarantee the quality of service of the different information sources that share the common channel.

11. Method according with claims 1 to 7, **characterised by** the compatibility with existing asynchronous and synchronous HDLC controllers, while the HDLC synchronous controllers will have higher preemption delays than the asynchronous ones.

12. Method according with claims 1 to 7, **characterised** for supporting real time services sensitive to delays and delay variation, as telephony, audio and circuit emulation, with constant bit-rate, including low bit-rate channels, with guarantee of a low delay and low variation delay, independently of the lower priority load.

13. Method according with claims 1 to 7, **characterised by** lower delay, higher efficiency and lower overhead than other frame based technologies, namely X.25, Frame Relay or Frame Relay with Segmentation (FRF.12), due to having an optimised segmentation mechanism associated to the said preemption mechanism, which only segment the frames when needed to guarantee the quality of service of a higher priority frame

14. Method according with claims 1 to 7, **characterised by** lower delay, higher efficiency and lower overhead than ATM technology, due to a simpler and more efficient segmentation than the equivalent mechanisms provided by the ATM and AAL layers combined.

15. Method according with claims 1 to 7, **characterised by** its capability to be used with interfaces and channel of any bit-rates, with advantages over other protocols in particular for low bit-rate channels, for example lower than 2 Mbit/s, wired or wireless.

16. Method according with claims 1 to 7, **characterised by** a high efficiency of channel occupation, namely when used with data services more tolerant to delay or with a traffic mix of real-time and data traffic.

17. Method according with claims 1 to 7, **characterised by** its capability to support or be adapted to a diversity of data communication protocols, for example HDLC, PPP, Multilink PPP, Multi-Class Multilink PPP, Frame Relay, V.120.

18. Method according with claims 1 to 7, **characterised by** the capability to support different mechanisms of quality of service provided by different protocols and models, for example the mechanisms provided by IPv4, IPv6, DiffServ e IntServ.

19. Method according with claims 1 to 7, **characterised by** its capability of multiplexing several types of information, for example voice and data, in a variety of terminal equipment and access network equipments, located at the user or at the operator premises, for example in the following:
a) Personal Computers, for multiplexing of voice and data services, using an asynchronous serial interface and a Modem, connected via one analog line to a network service provider;
b) Personal Computers, for multiplexing of voice and data services, using an ISDN line with 64 Kbit/s or 128 Kbit/s channels connected to an network service provider;
c) Subscriber equipment with Bridge functionality, with analog (Modem) or digital (ISDN, ADSL, SDSL or SHDSL) interfaces;
d) Subscriber equipment with Router functionality, with analog (Modem) or digital (ISDN, ADSL, SDSL or SHDSL) interfaces;
e) Subscriber equipment with Integrated Access Device (IAD) functionality, with analog (Modem) or digital (ISDN, ADSL, SDSL or SHDSL) interfaces;
f) Network operator equipment DSLAM (DSL Access Multiplexer), with IDSL, ADSL, SDSL or SHDSL interfaces.

## Patentansprüche

1. Verfahren zur Datenkommunikation, das die gleichzeitige Übertragung verschiedene Arten von Informationen erlaubt, das sich auf Datenrahmen, die kompatibel mit dem HDLC-Protokoll sind, wie in ISO 3309 definiert ist, basiert, mit mehreren Mechanismen und Felder, die durch den Dienstanforderungen bedingt sind, mit einer Dienstgüte (*Quality of service - QoS*), die durch einen Vorrangbelegungsmechanismus, der die Zurückhaltung der übertragenden Datenrahmen, und die unverzügliche Verwendung des Kanals durch eine Datenrahmen mit höherer Priorität erlaubt, und gleich nach der Übertragung der Datenrahmen mit höherer Priorität, die Übertragung der zurückgehaltenden Datenrahmen wiederaufgenommen wird, ohne, dass es nötig ist, die Wiederübertragung der schon gesendeten Oktette, gesichert ist, **dadurch gekennzeichnet, dass** die besagten Datenrahmen (1) in drei funktionelle Schichten, A, B und C, strukturiert sind; die Schicht A hat die Funktion die Datenrahmen abzugrenzen, zu multiplexen und die Datentransparenz zu sichern, die Schicht B hat die Funktion Fehler zu erkennen und Schicht C hat die Funktion die Datenrahmen zurückzuhalten/wiederaufzunehmen und die Datenrahmen zu segmentieren; diese drei Schichten entsprechen drei Rahmenformate, Datenrahmen A, Datenrahmen B und Datenrahmen C und drei Trägerdienste, nämlich Sa, Sb und Sc, die bei verschiedene Dienste, gemäß seine Dienstgüteanforderungen, die eine Vielzahl von Prioritäten, durch einen rekursiven Zurückhaltungsmechanismus einer Datenrahmen bei einen anderen Datenrahmen mit höherer Priorität, welche die Verwendung von Protokolle mit meheren Klassendienste erlaubt, nämlich das *Differentiated Services* Protokoll (*DiffServ*) und das *Integrated Services* Protokoll (*IntServ*) unterstützt verwendet werden können.

2. Verfahren nach Anspruch 1, **dadurch gekennzeichnet, dass** die besagten Datenrahmen A (11) folgende Felder, die sich in den Rahmen in der folgenden Reihenfolge befinden, besitzen:
a) ein Anfangsfeld (*Start-Flag*-Feld) mit dem Hexadezimalwert 7E, das den Datenrahmenanfang, wie in dem HDLC-Protokoll, erkennt;
b) ein Dienstklassenfeld (*Device Class - SC*), das die Dienstklasse und somit den Datenrahmentyp erkennt;
c) ein Kanalnummerfeld (*Channel Identifier - CI*), das einen bestimmten Kanal innerhalb einer Klasse erkennt, falls es nur einen Kanal in jeder Klasse gib, muss es nicht vorhanden sein;
d) die beiden besagten Felder, Dienstklassenfeld SC (22) und Kanalnummerfeld CI (23), haben eine variable Länge, und beide zusammen entsprechen dem HDLC-Adressfeld, und sind also völlig kompatibel mit dem HDLC-Protokoll, d. h. das Bit geringster Signifikanz jedes Oktetts in beiden Feldern soll zu 0 gesetzt werden, mit der Ausnahme des letzten Oktetts, das zu 1 gesetzt sein soll;
e) ein INFOa-Feld mit variabler Länge, um Information von höheren Schichten zu übertragen;
f) ein Endfeld (*Ende-Flag-Feld*) mit dem Hexadezimalwert 7E, das das Datenrahmenende, wie in dem HDLC-Protokoll, erkennt.

3. Verfahren nach Anspüche 1 und 2, **dadurch gekennzeichnet, dass** die besagten Datenrahmen B (12), ein Rahmenformat, das sich an den besagten Datenrahmen A (11) basiert, aber wo das besagte INFOa-Feld (24), durch folgende Felder, und in folgender Reihenfolge, ersetzt ist, besitzen:
a) ein INFOb-Feld mit variabler Länge, um Information von höheren Schichten zu übertragen;
b) ein Blockprüfsummenfeld (*Frame Check Sequence - FCS*), um Fehler, wie in dem HDLC-Protokoll, zu erkennen.

4. Verfahren nach Ansprüche 1 bis 3, **dadurch gekennzeichnet, dass** die besagten Datenrahmen C (13), ein Rahmenformat, das sich an den besagten Datenrahmen B (12) basiert, aber wo das besagte INFOb-Feld (26), durch folgende Felder, und in folgender Reihenfolge, ersetzt ist, besitzen:
a) ein Sequenznummerfeld (*Sequence Number - SN*), das die Sequenznummer des Übertragungsrahmens einer bestimmten Dienstklasse angibt, das mit 0 anfängt und für jeden gesendeten Rahmen oder Segment inkrementiert wird; jede Klasse hat einer unabhängige Sequenznummerzähler;
b) ein INFOc-Feld mit variabler Länge, um Information von höheren Schichten zu übertragen;
c) ein Anfangsendefeld (BE), bestehend aus zwei Bits - B (*Begin*) und E (*End*) *-* und sechs zusätzliche Auffüllbits, um ein Oktett zu bilden, die besagten Bit B und Bit E dienen zur Zustandangebung der Datenrahmensegmentierung am Sender und zur Zusammenzusetzung der verschidenen Segmente am Empfänger, mit folgender Codierung:
BE = 11 - nicht segmentierter Datenrahmen
BE = 10 - erstes Segment eines segmentierten Datenrahmen
BE = 00 - mittleres Segment eines segmentierten Datenrahmen
BE = 01 - letztes Segment eines segmentierten Datenrahmen.

5. Verfahren nach Ansprüche 1 bis 4, **dadurch gekennzeichnet, dass** der besagte Trägerdienst Sa (31) folgende Funktionalitäten, entsprechend den Zugang (*access*) durch die gennante Schicht A (41) und mit der Verwendung der besagten Datenrahmen A (11) assoziert ist, besitzt:
a) ein Mechanismus zur Begrenzung der Datenblöcke oder Datenrahmen, der sich auf das besagte Anfangsfeld (21) und Endfeld (25), wie in dem HDLC-Protokoll, basiert;
b) ein Mechanismus zur Kanalbenutzung (*Channel filling Mechanismus*), der sich auf den *Flags* des HDLC-Protokolls basiert;
c) ein Verfahren zur Einfügung eines Null-Bits nach Übertragung von fünf nacheinander Eins-Bits und ihre Entfernung am Empfänger, um die Nachahmung der Anfangs- oder der Endflagmuster zu verhindern und, um die Datentransparenz zu sichern, wie in dem HDLC-Protokoll und in synchronen, seriellen Schnittstellen verwendet wird;
d) ein Verfahren zur Einfügung eines Kontroll-Escape-Oktetts, um die Nachahmung der Anfangs- und Endflagkennzeichnung zu verhindern und, um die Datentransparenz zu sichern, wie in ISO 3309:1984/PDAD1 und in IETF RFC 1662 definert ist, und in oktettorientierten, asynchronen, seriellen Schnittstellen verwendet wird;
e) ein Rahmen- und Segmentmultiplexverfahren für verschiedene Klassen, das sich auf das Dienstklassenfeld SC (22) basiert;
f) ein Rahmenmultiplexverfahren von verchiedenen Kanälen für eine bestimmte Klasse, das sich auf das Kanalkennungsfeld CI (23) basiert.

6. Verfahren nach . Ansprüche 1 bis 5, **dadurch gekennzeichnet, dass** der besagte Trägerdienst Sb (32) die Funktionalitäten des besagten Trägerdienstes A (31) und zusätzlich folgende Funktionalitäten der gennanten Schicht B (42) und mit der Verwendung der besagten Datenrahmen B (12) assoziert ist, besitzt:
a) ein Verfahren zur Erzeugung des besagten Blockprüfsummenfelds FCS (27) am Sender, wie in dem HDLC-Protokoll;
b) ein Verfahren zur Rahmenfehlererkennung am Empfänger, das sich auf das besagte Blockprüfsummenfeld FCS, wie in dem HDLC-Protokoll, basiert.

7. Verfahren nach Ansprüche 1 bis 6, **dadurch gekennzeichnet, dass** der Trägerdienst Sc (33) die Funktionalitäten des besagten Trägerdienstes B und zusätzlich folgende Funktionalitäten der besagten Schicht C (113) und mit der Verwendung der besagten Datenrahmen C (13) assoziert ist, besitzt:
a) ein Verfahren zur Aufzählung der gesendeten Rahmen oder Segmente durch das besagte Sequenznummerfeld SN (28), das für jede gesendeten Rahmen oder Segmente einer bestimmten Klasse inkrementiert wird;
b) ein Verfahren zur Kontrolle der Aufzählung der empfangten Rahmensequenznummer, das das besagte Sequenznummerfeld SN (28) verwendet, und das die Erkennung von Segmentverluste und somit die Erkennung der Datenrahmen, die mit Fehler empfangt werden, ermöglicht;
c) ein Verfahren zur Rahmensegmentierung, das das besagte Anfangs- und Endfeld BE (29) verwendet;
d) ein Verfahren zur Zusammensetzen der Segmente am. Empfänger, das das Anfangs- und Endfeld (29) verwendet;
e) ein Verfahren zur Vorrangbelegung eines Kanals bei einen Datenrahmen mit höherer Priorität, mit einer kurzen Durchschaltungsverzögerung, seit der Erkennung des Datenrahmen mit höherer Priorität bis seinen Übertragungsanfang, wegen der Position des Anfangs- und Endfelds BE am Rahmenende, genau vor dem Blockprüfsummenfeld FCS (27).

8. Verfahren nach Ansprüche 1 bis 7, **gekennzeichnet durch** eine Multiplex- und Durchschaltungstechnologie, das die Vorteile der geringen Durchschaltungsverzögerung, die statistische Multiplexen Effizienz der Paketdurchschaltung und die Einfachheit der Rahmenweiterleitung (*frame-relay*) besitzt.

9. Verfahren nach Ansprüche 1 bis 7, **gekennzeichnet durch** einen recursiven Vorrangbelegungmechanismus eines Kanals, um geringe Vermittlungsverzögerung für verzögerungssensible Dienste zu sichern, das ein vorrangbelegender Datenrahmen, **durch** einen Datenrahmen mit höherer Priorität zurückgehalten werden kann, und dieser kann **durch** das selbe Vorrangbelegungsmechanismus, so oft wie nötig, zurückgehalten werden, ohne die Erhöhung der Verwaltungsdaten (*overhead*) des Verfahrens.

10. Verfahren nach Ansprüche 1 bis 7 **gekennzeichnet durch** einen Dienstklassifierungsmechanismus, der sich auf einer Dienstklassennummer basiert, so dass es möglich ist, die Datenrahmen verchiedener Klassen **durch** irgendein willkürliches Schema, das **durch** den Benutzer definiert ist, um die Dienstgüte der verschiedenen Datenquellen, die den selben Kanal verwenden, zu sichern, zu übertragen.

11. Verfahren nach Ansprüche 1 bis 7, **dadurch gekennzeichnet, dass** es mit bestehenden, asynchronen und synchronen, HDLC-Kontrollern kompatibel sind, dennoch haben die synchronen HDLC-Kontroller eine höhere Vorrangbelegungsverzögerung als die asynchronen HDLC-Kontroller.

12. Verfahren nach Ansprüche 1 bis 7, **dadurch gekennzeichnet, dass** sie Echtzeit-Dienste, die empfindlich zu Verzögerung und zu Schwankungen der Signalverzögerung, wie, zum Beispiel, Telephonie, Sprachdienste und Schnittstellenemulationdienste, mit konstanter Bitrate, einschließlich Kanäle mit geringer Bitrate, mit einer garantierten geringen Verzögerung und geringe Verzögerungschwankungen, unabhängig vom Datenpaket mit niedriger Priorität, unterstützen.

13. Verfahren nach Ansprüche 1 bis 7, **gekennzeichnet durch** eine geringe Verzögerung, eine höhere Effizienz und geringe Verwaltungsdaten (*overhead*) als andere Datenrahmen basierten Technologien, nämlich X.25, *Frame Relay* oder *Frame Relay* mit Segmentierung (FRF.12), aufgrund eines optimizierten Segmentierungsverfahrens, das mit dem besagten Vorrangsbelegungsmechanismus assoziert ist, der nur Datenrahmen segmentiert, wenn es nötig ist, um die Dienstgüte einer Datenrahmen mit einer höheren Priorität zu sichern.

14. Verfahren nach Ansprüche 1 bis 7, **gekennzeichnet durch** eine geringe Verzögerung, eine höhere Effizienz und geringe Verwaltungsdaten (*overhead*) als die ATM-Technologie, aufgrund einer einfachen und efizienten Segmentierung als das entsprechende Verfahren, das **durch** die ATM- und AAL-Schichten zusammen erlangt wird.

15. Verfahren nach Ansprüche 1 bis 7, **dadurch gekennzeichnet, dass** sie in Schnittstellen und Kanäle mit irgendeiner Bitrate, mit Vorteile gegenüber andere Protokolle, insbesondere für Kanäle mit niedriger Bitrate, zum Beispiel, kleiner als 2 Mbit/s, drahtgebunden oder drahtlos (*wireless*) verwendet werden können.

16. Verfahren nach Ansprüche 1 bis 7, **gekennzeichnet durch** eine höhere Effizienz der Kanalbenutzung, nämlich wenn sie in Datendienste mehr tolerant gegenüber Verzögerung oder wenn sie in einer Mischung aus Echtzeit- und *on-demand* Kommunikationen verwendet werden.

17. Verfahren nach Ansprüche 1 bis 7, **dadurch gekennzeichnet, dass** sie eine Vielfalt von Datenübertragungsprotokolle, zum Beispiel, HDLC, PPP, *Multilink* PPP, *Multi-Class Multilink* PPP, *Frame Relay,* V.120 unterstützen oder an sich anpassen.

18. Verfahren nach Ansprüche 1 bis 7, **dadurch gekennzeichnet, dass** sie verschiedene Dienstgüteprotokolle mit verschiedenen Protokolle und Modelle, zum Beispiel die Mechanismen, die durch IPv4, IPv6, *DiffServ* und *IntServ* erlangt werden, unterstützen.

19. Verfahren nach Ansprüche 1 bis 7, **gekennzeichnet durch** seine Fähigkeit verschiedene Arten von Information, zum Beispiel, Sprache und Daten, in eine Vielzahl von Endgeräte, und Zugangsnetzwerke, beim Benutzer oder beim Anbieter, wie, zum Beispiel, die Folgende, zu multiplexen:
a) Personal Computer zum Multiplexen von Sprache- und Datendienste, der an den Netzwerkanbieter, über eine analogische Linie und mit Verwendung einer asynchronen, seriellen Schnittstelle und eines Modem verbundet sind;
b) Personal Computer zum Multiplexen von Sprache- und Datendienste, die an den Netzwerkanbieter, über eine ISDN Line mit 64 kbit/s oder 128 kbit/s, verbundet sind;
c) Teilnehmergeräte mit Bridge-Funktionalität, mit analogen Schnittstellen (Modem) oder digitalen Schnittstellen (ISDN, ADSL, SDSL oder SHDSL);
d) Teilnehmergeräte mit Router-Funktionalität, mit analogen Schnittstellen (Modem) oder digitalen Schnittstellen (ISDN, ADSL, SDSL oder SHDSL);
e) Teilnehmergeräte mit *Integrated Access Device-*Funktionalität (IAD), mit analogen Schnittstellen (Modem) oder digitalen Schnittstellen (ISDN, ADSL, SDSL oder SHDSL);
f) DSLAM (*DSL Access Multiplexer*) Netzbetriebergeräte mit IDSL, ADSL, SDSL oder SHDSL Schnittstellen.

## Revendications

1. Méthode pour la communication de données qui permet la transmission simultanée de différents types d'information, basée sur des trames compatibles avec le protocole HDLC défini dans la norme ISO 3309, avec plusieurs mécanismes et champs selon les conditions requises du service, avec des garanties de qualité de service utilisant un mécanisme de préemption du canal qui permet la suspension de la trame en cours de transmission et l'occupation immédiate du canal par une trame plus prioritaire, recommençant la transmission de la trame suspendue après la transmission de la trame plus prioritaire, sans nécessité de retransmission des octets déjà transmis, **caractérisée en ce que** lesdites trames (1) sont structurées dans trois couches fonctionnelles, A, B et C, la couche A ayant comme fonctionnalité la délimitation de trames, le multiplexage et la transparence de l'information, la couche B ayant comme fonctionnalité la détection d'erreurs et la couche C ayant comme fonctionnalité la suspension/le recommencement de trames et la fragmentation de trames, ces trois couches correspondant à trois formats de trame, respectivement la trame A, la trame B et la trame C, et trois services de support dénommés Sa, Sb et Sc, qui peuvent être utilisés par des services différents selon leur conditions requises de qualité de service, supportant un nombre indéfini de priorités dû à un mécanisme de suspension récursive d'une trame par une autre plus prioritaire, ce qui permet l'utilisation de protocoles avec de multiples classes de service, notamment les protocoles de Services Différentiés et de Services Intégrés.

2. Méthode selon la revendication 1, dans laquelle lesdites trames A (11) sont **caractérisées par** les champs suivants, situés en séquence dans la trame par l'ordre de présentation :
a) Champ FLAG de début avec une valeur hexadécimale de 7E, identificateur du début de la trame, tout comme le HDLC ;
b) Champ CS (Classe de Service), identificateur de la classe de service et implicitement du type de trame ;
c) Champ IC (Identificateur de Canal), identificateur d'un canal spécifique dans une classe, qui peut être omis s'il n'y a qu'un seul canal dans chaque classe ;
d) Lesdits champs CS (22) et IC (22) ont tous les deux une longueur variable et correspondent ensemble au champ d'adresse HDLC, ce qui implique, pour une pleine compatibilité avec le HDLC, que le bit le moins significatif de chaque octet dans les deux champs doit être réglé à 0, à l'exception du dernier octet, qui doit être réglé à 1 ;
e) Champ INFOa de longueur variable, pour le transport d'information des couches supérieures ;
f) Champ FLAG de fin avec une valeur hexadécimale de 7E, identificateur de la fin de la trame, tout comme le HDLC.

3. Méthode selon les revendications 1 et 2, dans laquelle lesdites trames B (12) sont **caractérisées par** un format basé sur ladite trame A (11) où ledit champ INFOa (24) est substitué par les champs suivants, situés en séquence par l'ordre de description :
a) Champ INFOb de longueur variable, pour le transport d'information des couches supérieures ;
b) Champ FCS (*Frame Check Sequence,* Séquence de Vérification de Trame), pour la détection d'erreurs, tout comme le HDLC.

4. Méthode selon les revendications 1 à 3, dans laquelle lesdites trames C (13) sont **caractérisées par** un format basé sur lesdites trames B (12) où ledit champ INFOb (26) est substitué par les champs suivants, situés en séquence par l'ordre de description :
a) Champ NS (Numéro de Séquence) indiquant le numéro de séquence de transmission des trames pour une classe de service déterminée, qui est initialisé à 0 et incrémenté pour chaque trame ou segment qui est envoyé, chaque classe ayant un compteur de numéro de séquence indépendant ;
b) Champ INFOc de longueur variable, pour le transport d'information des couches supérieures ;
c) Champ BE, comprenant deux bits, B (*begin,* départ) et E (*end,* arrêt), et six bits additionnels pour l'alignement à l'octet, lesdits bits B et E étant utilisés pour l'indication de l'état de segmentation d'une trame dans l'émetteur et le regroupement des différents segments dans le récepteur, avec la codification suivante :
BE = 11 - trame non segmentée
BE = 10 - premier segment d'une trame segmentée
BE = 00 - segment du milieu d'une trame segmentée
BE = 01 - dernier segment d'une trame segmentée

5. Méthode selon les revendications 1 à 4, dans laquelle ledit service de support Sa (31) est **caractérisé par** la fonctionnalité suivante, correspondant à l'accès à travers ladite couche A (41) et associée à l'utilisation de ladite trame A (11) :
a) Mécanisme de délimitation de blocs de données ou de trames basé sur ledit FLAG de début (21) et ledit FLAG de fin (25), tout comme le HDLC ;
b) Mécanisme de remplissage de canal basé sur des FLAGs HDLC ;
c) Mécanisme d'insertion d'un bit à zéro après la transmission de cinq bits consécutifs à un et sa suppression dans le récepteur, pour éviter l'imitation du motif du FLAG de début ou de fin et garantir la transparence de l'information, tout comme le HDLC, et utilisé dans les interfaces en série synchrones ;
d) Mécanisme d'insertion d'octet d'échappement pour éviter l'imitation du motif du FLAG de début ou de fin et garantir la transparence de l'information, comme défini dans l'ISO 3309:1984/PDAD1 et dans l'IETF RFC 1662, et utilisé dans les interfaces en série asynchrones orientées octet ;
e) Mécanisme de multiplexage de trames et de segments de classes différentes, basé sur ledit champ CS (22) ;
f) Mécanisme de multiplexage de trames de canaux différents pour une classe spécifique, basé sur ledit champ IC (23).

6. Méthode selon les revendications 1 à 5, dans laquelle ledit service de support Sb (32) est **caractérisé par** la fonctionnalité dudit service de support A (31), avec la suivante fonctionnalité additionnelle de ladite couche B (42), associée à l'utilisation desdites trames B (12) :
a) Mécanisme de génération dudit champ FCS (27) dans l'émetteur, tout comme le HDLC ;
b) Mécanisme de détection d'erreurs de trame dans le récepteur, basé sur ledit champ FCS (27), tout comme le HDLC.

7. Méthode selon les revendications 1 à 6, dans laquelle ledit service de support Sc (33) est **caractérisé par** la fonctionnalité dudit service de support B, avec la suivante fonctionnalité additionnelle de ladite couche C (113), associée à l'utilisation desdites trames C (13) :
a) Mécanisme de numérotation des trames ou segments transmis, à travers ledit champ NS (28), qui est incrémenté pour chaque trame ou segment d'une classe spécifique qui est envoyé ;
b) Mécanisme de vérification du numéro de séquence de trame reçu, utilisant ledit champ NS (28), qui permet la détection de segments perdus et par conséquent la détection de trames reçues avec des erreurs ;
c) Mécanisme de fragmentation de trames, utilisant ledit champ BE (29) ;
d) Mécanisme de regroupement de segments dans le récepteur, utilisant ledit champ BE (29) ;
e) Mécanisme de préemption du canal par une trame plus prioritaire, avec un court délai de commutation entre la détection d'une trame plus prioritaire et le début de sa transmission, dû à la localisation du champ BE à la fin de la trame, immédiatement avant ledit champ FCS (27).

8. Méthode selon les revendications 1 à 7, **caractérisée par** une technologie de multiplexage et de commutation qui combine les avantages du court délai de la commutation de circuits, l'efficacité du multiplexage statistique de la commutation de paquets et la simplicité du relayage de trames.

9. Méthode selon les revendications 1 à 7, **caractérisée en ce qu'**elle possède un mécanisme récursif de préemption du canal pour garantir un court délai de mise en file d'attente pour les services sensibles aux délais, qui permet qu'une trame qui a effectué la préemption du canal puisse être suspendue par une autre trame plus prioritaire, laquelle peut elle-même être suspendue, avec la répétition du mécanisme de préemption autant de fois que nécessaire sans augmenter le surdébit du mécanisme.

10. Méthode selon les revendications 1 à 7, **caractérisée en ce qu'**elle possède un mécanisme de différentiation de service basé sur plusieurs classes de services, qui permet que la transmission des trames des diverse classes soit effectuée selon toute discipline de service arbitraire définie par l'utilisateur, afin de garantir la qualité de service des différentes sources d'information qui partagent le canal commun.

11. Méthode selon les revendications 1 à 7, **caractérisée en ce qu'**elle est compatible avec les contrôleurs HDLC asynchrones et synchrones existants, les contrôleurs HDLC synchrones ayant des temps de préemption supérieurs aux contrôleurs asynchrones.

12. Méthode selon les revendications 1 à 7, **caractérisée en ce qu'**elle supporte des services en temps réel sensibles aux délais et aux variations de délais, comme la téléphonie, l'audio et l'émulation de circuits, à débit de bits constant, y compris les canaux à bas débit de bits, garantissant un court délai et un court délai de variation, indépendamment de la charge prioritaire inférieure.

13. Méthode selon les revendications 1 à 7, **caractérisée en ce qu'**elle possède un délai inférieur, une efficacité supérieure et un surdébit inférieur aux autres technologies à base de trames, notamment le X.25, le Relayage de Trames ou le Relayage de Trames avec Segmentation (FRF.12), dû au fait qu'elle possède un mécanisme optimisé de segmentation associé audit mécanisme de préemption, où les trames sont segmentées uniquement quand il est nécessaire de garantir la qualité du service d'une trame plus prioritaire.

14. Méthode selon les revendications 1 à 7, **caractérisée en ce qu'**elle possède un délai inférieur, une efficacité supérieure et un surdébit inférieur à la technologie ATM, dû à une segmentation plus simple et plus efficace que les mécanismes équivalents apportés par l'ensemble des couches ATM et AAL.

15. Méthode selon les revendications 1 à 7, **caractérisée en ce qu'**elle peut être utilisée avec des interfaces et canaux à un quelconque débit de bits, avec des avantages par rapport aux autres protocoles, en particulier pour les canaux à bas débit de bits, par exemple inférieur à 2 Mbits/s, avec ou sans fils.

16. Méthode selon les revendications 1 à 7, **caractérisée par** une haute efficacité d'occupation du canal, notamment quand elle est utilisée avec des services de données plus tolérants aux délais ou dans des situations de trafic mixte de temps réel et de données.

17. Méthode selon les revendications 1 à 7, **caractérisée en ce qu'**elle est capable de supporter ou d'être adaptée à une diversité de protocoles de communication de données, par exemple HDLC, PPP, PPP Multiliaisons, PPP Multiliaisons Multiclasses, Relayage de Trames, V.120.

18. Méthode selon les revendications 1 à 7, **caractérisée en ce qu'**elle est capable de supporter divers mécanismes de qualité de service apportés par divers protocoles et modèles, par exemple les mécanismes apportés par IPv4, IPv6, DiffServ et IntServ.

19. Méthode selon les revendications 1 à 7, **caractérisée en ce qu'**elle est capable de multiplexer plusieurs types d'informations, par exemple de voix et de données, dans une diversité d'équipements terminaux et d'équipements de réseaux d'accès, situés dans les installations de l'utilisateur ou de l'opérateur, par exemple dans les équipements suivantes :
a) Ordinateurs Personnels, pour le multiplexage de services de voix et de données, utilisant une interface en série synchrone et un Modem, relié par une ligne analogue à un fournisseur de services de réseau ;
b) Ordinateurs Personnels, pour le multiplexage de services de voix et de données, utilisant une ligne RNIS comportant des canaux à 64 Kbit/s ou 128 Kbit/s reliée à un fournisseur de services de réseau ;
c) Équipement d'abonné avec la fonctionnalité de pont, ayant des interfaces analogues (Modem) ou numériques (RNIS, ADSL, SDSL ou SHDSL) ;
d) Équipement d'abonné avec la fonctionnalité de routeur, ayant des interfaces analogues (Modem) ou numériques (RNIS, ADSL, SDSL ou SHDSL) ;
e) Équipement d'abonné avec la fonctionnalité de dispositif d'accès intégré (IAD), ayant des interfaces analogues (Modem) ou numériques (RNIS, ADSL, SDSL ou SHDSL) ;
f) Équipement d'opérateur de réseau DSLAM (multiplexeur d'accès de ligne d'abonné numérique), ayant des interfaces RNIS, ADSL, SDSL ou SHDSL.
